# EUROPEAN PATENT SPECIFICATION

(11) **EP 2 882 650 B1**
(45) Date of publication and mention of the grant of the patent: **22.09.2021**
(21) Application number: 13829790.8
(22) Date of filing: 29.07.2013
(51) Int. Cl.: B65B 35/30

(54) **PARCEL HANDLING METHOD**
VERFAHREN ZUR HANDHABUNG VON PAKETEN
PROCÉDÉ DE MANIPULATION DE COLIS

(30) Priority: 13.08.2012 US 201261682562 P
(43) Date of publication of application: 17.06.2015
(73) Proprietor: Laitram, L.L.C., Harahan, LA 70123 (US)
(72) Inventor: WARGO, Stephen G., Laurel, Maryland 20723 (US)
(74) Representative: Forresters IP LLP
(86) International application number: PCT/US2013/052455
(87) International publication number: WO 2014/028204

(56) References cited:
- EP-A1- 0 130 810
- EP-A1- 0 633 208
- EP-A1- 0 927 689
- WO-A1-98/32545
- WO-A2-01/24947
- GB-A- 2 062 566
- US-A- 2 669 365
- US-A- 4 044 897
- US-A- 4 555 010
- US-A- 5 038 911
- US-A- 5 638 938
- US-A- 5 782 332
- US-A1- 2011 022 221
- US-B1- 6 471 044
- None

## Description

### BACKGROUND

The invention relates generally to power-driven conveyors and more particularly to methods for preparing parcels for sorting.

In typical parcel-sorting systems, a bulk flow of parcels (envelopes and packages) is distributed to a number of individual conveyors. A human operator at each conveyor arranges the parcels on an adjacent conveyor so that they are facing up and in a single file. The face-up single files of parcels are inducted onto a main conveyor where they are scanned so that they can be appropriately sorted downstream. This process is labor-intensive and paced by the operators.

US 5,638,938 discloses apparatus and method are provided for receiving a flow of packages such as parcels or bundles, dividing it into plural streams for easier singulation, singulating each such stream, and delivering the produced packages one at a time to a user, each stream being provided to a different user. Downstream sensors are used to control a deflector which in turn divides a received flow of packages into multiple such flows and apportions the received packages among the two output flows. Singulation of each such output flow is accomplished by a plurality of inclined belts which each moves a received package upward and over its peak to drop for entry into the next stage downstream, thereby singulating the received flow in stages. These belt stages are individually controlled by further downstream sensors and motors which prevent movement of upstream such belt(s) if one or more packages, indicating a flow blockage, is sensed downstream. The output of the singulator is provided to a slide that has a series of motor-controlled detents to deliver packages to the downstream user one at a time.

GB 2062566 discloses a feeding device for feeding articles to a conveyor of a conveying system which has a plurality of discharge stations at which articles carried by the conveyor can be discharged comprises a sorting surface to which articles to be sorted are fed by a pair of conveyors. A rotatable roller is positioned between the sorting surface and the conveyor. In use an operator takes an article from one of the conveyors, keys a destination code on the keyboard and places the article on the surface against the roller. The roller urges the article onto the conveyor. After the article has passed over the roller, drive to the roller is interrupted for a given time to allow sufficient spacing between that article and the next article placed on the surface. When the roller is not rotating it acts as a barrier against articles being fed to the conveyor.
US 6,471,044 discloses a hold-and-release singulator includes a conveyor having a transport mechanism for carrying a group of items such as parcels, packages, containers or the like from an entry end towards an exit end of the singulator, a hold and release system that can hold items that have entered the singulator on the conveyor so that such items are not transported by the conveyor while causing one item to be transported by the conveyor, and a control system that controls operation of the conveyor and the hold-and-release system in a manner effective to remove the group of items from the exit end of the conveyor one at a time according to a removal scheme with a predetermined minimum spacing. The hold and release system can take several forms, such as a mechanism for selectively actuating a portion of the conveyor at a time to remove an item from the exit end of the conveyor, or a mechanism that can hold items off of the conveyor surface so that such items are not transported when the conveyor is running, and selectively set items onto the conveyor surface so that such items are transported when the conveyor is running. In the latter case, the control system controls operation of the conveyor and the hold-and-release system in a manner effective to hold a group of items off of the conveyor surface and then lower the items according to the removal scheme so that the items leave the exit end of the conveyor one at a time with a predetermined minimum spacing. The items may be supported from beneath by a series or array of supports which lift the items, or an arm may suspend the items from above to hold the items off of the conveyor surface.

WO 98/32545 discloses an optically-guided indicia reader system including a conveyor carrying a parcel bearing a destination address. An illumination source defines an area to assist the positioning of the parcel on the conveyor. A scanner and a computer memory of a character recognition system are operated so as to store an image of a region defined with respect to the moving illuminated area. A sensor assembly, including a height sensor and reflectivity sensor, is located toward the downstream location of the illumination source. The scanner includes internal components that automatically focuses the scanner in response to height data, and adjusts the gain of the scanner in response to reflectivity data, so that the scanner generates a clear image of the top of the parcel as the parcel passes beneath the scanner. A photo sensor is positioned upstream from the scanner to detect the presence of the parcel. The video data generated by the scanner may be stored in the computer memory only when the beam of the photo sensor is broken. A time delay may be imposed to account for the distance between the beam and the scan line. Alternatively, a moving-light illumination source defines a spot that moves at the same speed as the conveyor to assist the positioning of the parcel on the conveyor.

### SUMMARY

In accordance with the present invention there is provided a method for handling parcels comprising:
depositing parcels onto a bulk conveyor using unloaders;
metering a bulk flow of parcels into a metered bulk flow on a first metering conveyor;
separating the metered bulk flow of parcels into two or more individual streams of parcels on a separator, wherein the parcels in each of the individual streams of parcels are singulated;
accumulating the singulated parcels in each of the individual streams on a buffer conveyor;
delivering the accumulated, singulated parcels in each individual stream of parcels to a corresponding individual culling and facing station, wherein each culling and facing station is manned by an individual human operator;
manually culling unacceptable parcels from the individual stream of parcels at each culling and facing station;
manually facing acceptable parcels at each culling and facing station so that identifying indicia on the parcels can be read downstream by a scanning station;
feeding the two or more culled, faced and singulated streams of parcels onto a scan conveyor using a facer conveyor;
feeding the two or more streams of read parcels onto an induction sorter using the scan conveyor, wherein the induction sorter sorts the two lanes of parcels to multiple discharge points; and
wherein the step of delivering the accumulated, singulated parcels to the culling and facing stations comprises releasing the parcels to the human operators at a fixed, steady rate using a second metering conveyor; and
wherein the method further comprises the step of conveying each individual stream of parcels through the culling and facing stations on a facer conveyor.

### BRIEF DESCRIPTION OF THE DRAWINGS

These features of the invention are described in more detail in the following description, appended claims, and accompanying drawings, in which:
FIG. 1 is a top plan view of a conveyor system embodying features of the invention; and
FIG. 2 is a block diagram of the conveyor system of FIG. 1.

### DETAILED DESCRIPTION

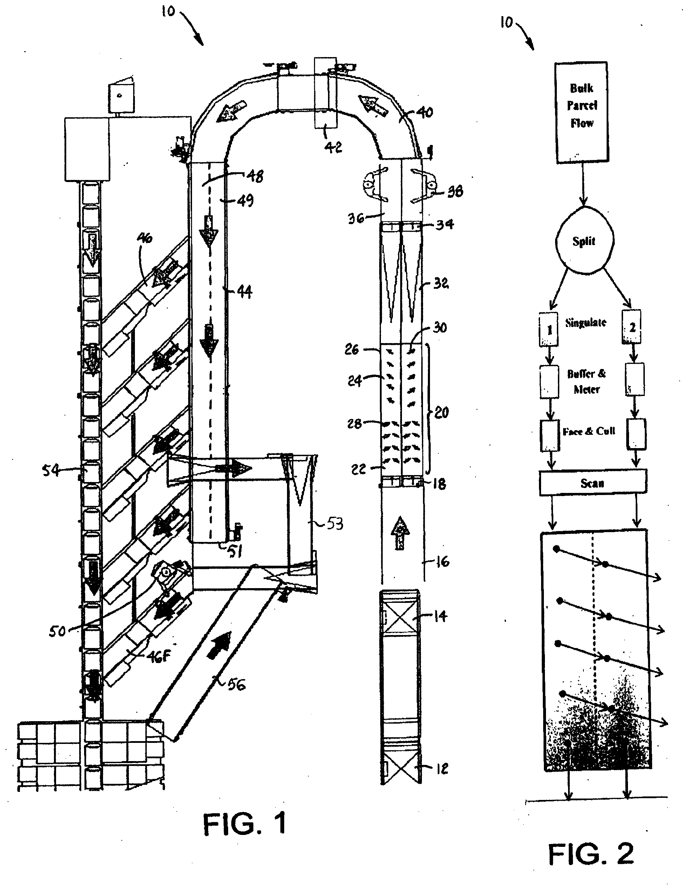

A conveyor system embodying features of the invention is shown in FIG. 1. In the conveyor system 10, pallet loads of parcels 12 are emptied by unloaders 14 and deposited onto a bulk conveyor 16, which may be a chute or a conveyor belt, such as an in-line roller belt, that allows the parcels to accumulate with low back line pressure when the upstream supply of parcels exceeds the downstream demand. The bulk flow of parcels is metered downstream in a metering conveyor 18, such as a friction-top belt operated at a predetermined speed. The metered bulk flow of parcels is fed onto a separator 20, which singulates the parcels from the metering conveyor into two streams.

The separator may be realized with a two-lane, angled-roller centering belt or roller conveyors arranged in a similar pattern 22 followed by an angled-roller alignment belt or roller conveyors arranged in a similar pattern 24 that aligns parcels on each half of the belt against side rails 26. Rollers in the two-lane centering belt 22 are actuated to rotate in the direction of arrows 28 to direct the mass flow of parcels into two single-file streams in the middle of each lane. The single files of parcels are then aligned against the opposite side rails 26 by the alignment belt, whose rollers are actuated to divert parcels toward the outer sides of the conveyor as indicated by the arrows 30. The alignment belt may be run at a higher speed than the centering belt to increase the separation between consecutive parcels in each stream.

The two streams of parcels are fed to a buffer conveyor 32, which may be a chute or an in-line roller conveyor belt, to allow parcels in the two lanes to accumulate as necessary. The buffer conveyor 32 feeds the two lanes of parcels to a second metering conveyor 34 set to run at a predetermined speed to release the two streams at a fixed, steady rate to a pair of human operators 38-one for each stream-manning a facer conveyor 36 at individual culling and facing stations. In this way, the process is paced by the system and not by the operators.

Each human operator culls and faces the parcels in his assigned stream. Trash and parcels that are unacceptable (e.g., oversized or overweight) with downstream processing equipment, that are unlabeled, or that are otherwise problematic are culled from the stream by the operator. The operator also faces acceptable parcels with identifying indicia, such as printed labels, oriented so that they may be read by a video scanner downstream. The operator also singulates any side-by-side or piggyback parcels not completely singulated by the separator.

The two culled, faced, and singulated streams of parcels are fed by the facer conveyor 36 onto a scan conveyor 40, shown as a horse-shoe belt in this example for a compact footprint. But the scan conveyor segment could be linear. The scan conveyor can run at a higher speed to increase the gap between consecutive parcels in each stream. A scanning station 42 including at least one camera positioned over the scan conveyor monitors the two streams and reads the label on each parcel. The scan conveyor feeds the two streams of read parcels onto an induction sorter 44, which sorts the two lanes of parcels to multiple discharge points, such as induction conveyors 46 along one side of the induction sorter.

The induction sorter may be realized by a range of technology including a roller belt such as an INTRALOX® Series 7000 sorter belt and roller-activation system 47. The roller-activation system includes a series of individually actuated roller-activation mechanisms that control the rotation of the belt rollers in the sorter belt. The mechanisms are sequentially disposed in individual zones along the length of the induction sorter in each lane corresponding to the induction conveyors 46. The induction sorter selectively discharges parcels in the right-hand lane 48 off the conveyor belt and onto a selected induction conveyor 46. Once a spot in the right-hand lane has been vacated, the sorter can move a parcel from the left-hand lane 49 to the right-hand lane for diversion onto one of the induction conveyors. If all the induction conveyors 46 are full or a parcel is missorted, the induction sorter 44 delivers the parcel off its end 51 to a key station operator 50. Misread and unread parcels are also routed via a conveyor 53 to the key station operator 50, who can then manually key the received parcels and load them onto a final induction conveyor 46F or send them to a remote encoding station for keying. Parcels rejected downstream may also be sent to the key station operator via a final return conveyor 56

The induction conveyors 46, which are shown as angled obliquely relative to the lanes of parcels in the main conveying direction of the induction sorter 44, convey the parcels to downstream processing via a tray conveyor 54.

The block diagram of FIG. 2 provides an overview of the process. A bulk flow of parcels is split into two separated streams of parcels. Each stream is buffered and metered for delivery at a predetermined rate to a human operator. Each operator culls unacceptable items from the stream, faces the parcels so that they can be properly scanned, and singulates any residual unsingulated parcels. The two streams of parcels travel side by side through the scanning station where their labels are read. The scanned parcels are delivered in two streams to the induction sorter, which sorts the parcels from both streams off the sorter.

Although the invention has been described in detail with respect to a few preferred versions, other versions are possible. For example, the bulk parcel flow could be separated into three or more streams, rather than just two. As another example, the cross belt sorter could have more than two lanes and corresponding actuation mechanisms to handle more streams of parcels. Furthermore, the induction sorter could sort to discharge points on both sides. The induction conveyors may be oblique to the induction sorter as shown or perpendicular.

## Claims

1. A method for handling parcels (12) comprising:
depositing parcels (12) onto a bulk conveyor (16) using unloaders (14);
metering a bulk flow of parcels (12) into a metered bulk flow on a first metering conveyor (18);
separating the metered bulk flow of parcels into two or more individual streams of parcels on a separator (20), wherein the parcels in each of the individual streams of parcels are singulated;
accumulating the singulated parcels in each of the individual streams on a buffer conveyor (32);
delivering the accumulated, singulated parcels in each individual stream of parcels to a corresponding individual culling and facing station, wherein each culling and facing station is manned by an individual human operator (38);
manually culling unacceptable parcels from the individual stream of parcels at each culling and facing station;
manually facing acceptable parcels at each culling and facing station so that identifying indicia on the parcels can be read downstream by a scanning station (42);
feeding the two or more culled, faced and singulated streams of parcels onto a scan conveyor (40) using a facer conveyor (36);
feeding the two or more streams of read parcels onto an induction sorter (44) using the scan conveyor (40), wherein the induction sorter (44) sorts the two lanes of parcels to multiple discharge points; and
wherein the step of delivering the accumulated, singulated parcels to the culling and facing stations comprises releasing the parcels to the human operators at a fixed, steady rate using a second metering conveyor (34); and
wherein the method further comprises the step of conveying each individual stream of parcels through the culling and facing stations on a facer conveyor (36).

2. The method of claim 1 further comprising manually singulating acceptable parcels at each culling and facing station that are piggybacked or side by side.

3. The method of claim 1 further comprising delivering the individual streams of acceptable parcels to a scanning station (42) and reading the identifying indicia on each of the parcels at the scanning station.

4. The method of claim 1 further comprising delivering the individual streams of acceptable parcels to a sorter (44).

5. The method of claim 4 further comprising sorting the parcels off one or both sides of the sorter (44) at multiple discharge points along the length of the sorter.

6. The method of claim 3 comprising:
feeding the individual streams of parcels exiting the scanning station (42) onto a sorter (44) in parallel lanes (48, 49);
discharging a parcel from a spot in a lane (48) closest to a side of the sorter (44) off the side of the sorter at a selected one of multiple discharge points;
diverting a neighboring parcel from an adjacent lane (49) to occupy the spot vacated by a parcel discharged off the side of the sorter for subsequent discharge from the lane (48) closest to the side of the sorter (44).

7. The method of claim 6 comprising discharging parcels from lanes (48) closest to both sides of the sorter (44) off the sides of the sorter at multiple discharge points.

8. The method of claim 6 comprising conveying parcels discharged from the sorter (44) on an angle oblique to the lanes (48, 49) of parcels on the sorter.

## Patentansprüche

1. Verfahren zur Handhabung von Paketen (12), umfassend:
Ablegen von Paketen (12) auf einem Massenförderer (16) unter Verwendung von Entladern (14);
Dosieren eines Massenflusses von Paketen (12) zur Herbeiführung eines dosierten Massenflusses auf einem ersten Dosierförderer (18);
Auftrennen des dosierten Massenflusses von Paketen in zwei oder mehr individuelle Ströme von Paketen auf einem Separator (20), wobei die Pakete in jedem der individuellen Ströme von Paketen vereinzelt werden;
Ansammeln der vereinzelten Pakete in jedem der individuellen Ströme auf einem Pufferförderer (32);
Zuführen der angesammelten, vereinzelten Pakete in jedem individuellen Strom von Paketen zu einer entsprechenden individuellen Aussortier- und Ausrichtstation, wobei jede Aussortier- und Ausrichtstation mit einem individuellen menschlichen Bediener (38) besetzt ist;
manuelles Aussortieren unannehmbarer Pakete aus dem individuellen Strom von Paketen an jeder Aussortier- und Ausrichtstation;
manuelles Ausrichten annehmbarer Pakete an jeder Aussortier- und Ausrichtstation, so dass identifizierende Zeichen auf den Paketen stromabwärts von einer Abtaststation (42) gelesen werden können;
Speisen der zwei oder mehr aussortierten, ausgerichteten und vereinzelten Ströme von Paketen auf einen Abtastförderer (40) unter Verwendung eines Ausrichtförderers (36);
Speisen der zwei oder mehr Ströme von gelesenen Paketen auf einen Induktionssortierer (44) unter Verwendung des Abtastförderers (40), wobei der Induktionssortierer (44) die zwei Bahnen von Paketen zu multiplen Austragspunkten hin sortiert; und
wobei der Schritt des Zuführens der angesammelten, vereinzelten Pakete zu den Aussortier- und Ausrichtstationen das Freigeben der Pakete an die menschlichen Bediener mit einer festen, stetigen Rate unter Verwendung eines zweiten Dosierförderers (34) umfasst; und
wobei das Verfahren ferner den Schritt des Förderns jedes individuellen Stroms von Paketen durch die Aussortier- und Ausrichtstationen auf einen Ausrichtförderer (36) umfasst.

2. Verfahren nach Anspruch 1, ferner umfassend das manuelle Vereinzeln annehmbarer Pakete an jeder Aussortier- und Ausrichtstation, die huckepack oder nebeneinander sind.

3. Verfahren nach Anspruch 1, ferner umfassend das Zuführen der individuellen Ströme von annehmbaren Paketen zu einer Abtaststation (42) und das Lesen der identifizierenden Zeichen auf jedem der Pakete an der Abtaststation.

4. Verfahren nach Anspruch 1, ferner umfassend das Zuführen der individuellen Ströme von annehmbaren Paketen zu einem Sortierer (44).

5. Verfahren nach Anspruch 4, ferner umfassend das Sortieren der Pakete von einer oder beiden Seiten des Sortierers (44) herunter an multiplen Austragspunkten entlang der Länge des Sortierers.

6. Verfahren nach Anspruch 3, umfassend:
Speisen der individuellen Ströme von Paketen, die die Abtaststation (42) verlassen, auf einen Sortierer (44) in parallelen Bahnen (48, 49);
Austragen eines Pakets aus einer Stelle in einer Bahn (48), die einer Seite des Sortierers (44) am nächsten ist, von der Seite des Sortierers herunter an einem ausgewählten von multiplen Austragspunkten;
Umlenken eines benachbarten Pakets aus einer angrenzenden Bahn (49), um die Stelle zu belegen, die von einem Paket aufgegeben wurde, das von der Seite des Sortierers herunter ausgetragen wurde, zum anschließenden Austragen aus der Bahn (48), die der Seite des Sortierers (44) am nächsten ist.

7. Verfahren nach Anspruch 6, umfassend das Austragen von Paketen aus Bahnen (48), die beiden Seiten des Sortierers (44) am nächsten sind, von den Seiten des Sortierers herunter an multiplen Austragspunkten.

8. Verfahren nach Anspruch 6, umfassend das Fördern von Paketen, die aus dem Sortierer (44) ausgetragen wurden, unter einem schrägen Winkel zu den Bahnen (48, 49) von Paketen auf dem Sortierer.

## Revendications

1. Un procédé de manipulation de colis (12) consistant à :
déposer des colis (12) sur un convoyeur de vrac (16) en utilisant des déchargeurs (14) ;
mesurer un défilement de colis en vrac (12) dans un défilement en vrac mesuré sur un premier convoyeur de mesurage (18) ;
séparer le défilement de colis en vrac mesuré en deux ou plus de deux flux de colis individuels sur un séparateur (20), dans lequel les colis dans chacun des flux individuels de colis sont isolés ;
accumuler les colis isolés dans chacun des flux individuels sur un convoyeur tampon (32) ;
amener les colis isolés accumulés dans chaque flux de colis individuel à un poste de placement de face et de retrait individuel correspondant, dans lequel chaque poste de placement de face et de retrait est tenu par un opérateur humain individuel (38) ;
retirer manuellement les colis inacceptables du flux de colis individuel à chaque poste de placement de face et de retrait ;
placer de face manuellement les colis acceptables à chaque poste de placement de face et de retrait de telle sorte que des repères d'identification sur les colis peuvent être lus en aval par un poste de scannage (42) ;
acheminer les deux ou plus de deux flux de colis isolés, placés de face et retirés sur un convoyeur de scannage (40) en utilisant un convoyeur de placement de face (36) ;
acheminer les deux ou plus de deux flux de colis lus sur une trieuse à induction (44) en utilisant le convoyeur de scannage (40), dans lequel la trieuse à induction (44) trie les deux files de colis vers des points d'évacuation multiples ; et
dans lequel l'étape consistant à amener les colis isolés accumulés aux postes de placement de face et de retrait consiste à présenter les colis aux opérateurs humains à une cadence constante en utilisant un deuxième convoyeur de mesurage (34) ; et
dans lequel le procédé comprend en outre l'étape consistant à transporter chaque flux de colis individuel à travers les postes de placement de face et de retrait sur un convoyeur de placement de face (36).

2. Le procédé selon la revendication 1, consistant en outre à séparer manuellement à chaque poste de placement de face et de retrait les colis acceptables qui sont superposés ou côté à côte.

3. Le procédé selon la revendication 1, consistant en outre à amener les flux de colis acceptables individuels à un poste de scannage (42) et à lire les repères d'identification sur chacun des colis au poste de scannage.

4. Le procédé selon la revendication 1, consistant en outre à amener les flux de colis acceptables individuels à une trieuse (44).

5. Le procédé selon la revendication 4, consistant en outre à trier les colis d'un côté ou des deux côtés de la trieuse (44) à des points d'évacuation multiples le long de la longueur de la trieuse.

6. Le procédé selon la revendication 3, consistant à :
acheminer les flux de colis individuels sortant du poste de scannage (42) sur une trieuse (44) dans des files parallèles (48, 49) ;
évacuer un colis d'un endroit dans une file (48) la plus proche d'un côté de la trieuse (44) sur le côté de la trieuse à un point sélectionné des points d'évacuation multiples ;
dévier un colis voisin d'une file adjacente (49) pour occuper l'endroit laissé vacant par un colis évacué sur le côté de la trieuse pour une évacuation ultérieure de la file (48) la plus proche du côté de la trieuse (44).

7. Le procédé selon la revendication 6, consistant à évacuer des colis des files (48) les plus proches des deux côtés de la trieuse (44) sur les côtés de la trieuse à des points d'évacuation multiples.

8. Le procédé selon la revendication 6, consistant à transporter des colis évacués de la trieuse (44) à un angle oblique par rapport aux files (48, 49) de colis sur la trieuse.
